# EUROPÄISCHE PATENTSCHRIFT

(11) **EP 0 372 107 B1**
(45) Veröffentlichungstag und Bekanntmachung des Hinweises auf die Patenterteilung: **02.03.1994**
(21) Anmeldenummer: 88120334.3
(22) Anmeldetag: 06.12.1988
(51) Int. Cl.: G05B 19/405

(54) **Verfahren zur Simulation der Bearbeitung eines Werkstückes und Darstellung desselben, sowie Vorrichtung zur Durchführung des Verfahrens**
Methode and device for simulating the machining of a work piece and its display
Méthode et dispositif de simulation de l'usinage d'une pièce et sa visualisation

(43) Veröffentlichungstag der Anmeldung: 13.06.1990
(73) Patentinhaber: Dr. Johannes Heidenhain GmbH, D-83292 Traunreut (DE)
(72) Erfinder: Rutkowski, Christian, Dipl.-Phys., D-8220 Traunstein (DE)

(56) Entgegenhaltungen:
- EP-A- 0 117 614
- EP-A- 0 144 585
- EP-A- 0 153 556
- DE-A- 3 608 438
- PROCEEDINGS OF THE 1986 IEEE INTERNATIONAL CONFERENCE ON ROBOTICS AND AUTOMATION vol. 1, April 1986, NEW YORK US, Seiten 156-165; Sungurtekin & Voelker: "GRAPHICAL SIMULATION & AUTOMATIC VERIFICATION OF NC MACHINE PROGRAMS"

## Beschreibung

Die Erfindung bezieht sich auf ein Verfahren nach dem Oberbegriff des Anspruches 1 und auf eine Vorrichtung gemäß dem Oberbegriff des Anspruches 4.

Aus der Technik des sogenannten Computer Aided Design (CAD) ist es bekannt, Körper perspektivisch am Bildschirm einer Rechnereinheit darzustellen. Dabei werden die Konturen bzw. die Veränderungen des Modells interaktiv vom Benutzer eingegeben.

Aus der DE-A1-34 01 060 ist ein Verfahren bekannt, das zur grafischen Darstellung von simulierter Werkstückbearbeitung dient. Das Bild des bearbeiteten Werkstückes entsteht dabei sukzessive durch die fortwährende Überlagerung der sich ändernden Werkstückpolygone mit den dem Werkzeug und seiner Bahn entsprechenden Bearbeitungspolygonen. Diese Polygone sind hierarchisch geordnet und werden verknüpft.

Nähere Angaben über die Art der Verknüpfungen und die Bildung resultierender Konturen für den Fall, daß sich die Polygone nicht schneiden, sind dort nicht offenbart.

Der Erfindung liegt die Aufgabe zugrunde, ein Verfahren und eine Vorrichtung anzugeben, die die Nachteile des Standes der Technik nicht aufweisen, und die eine Simulation der Werkstückbearbeitung anhand des vorhandenen NC-Programmes und der vorhandenen NC-Steuerung ermöglichen, und daß die so veränderten Werkstückkonturen grafisch dargestellt werden können.

Diese Aufgabe wird durch ein Verfahren gemäß dem Anspruch 1 und mit einer Vorrichtung gemäß Anspruch 4 gelöst.

Die wesentlichen Vorteile der Erfindung liegen darin, daß die Konturen bzw. die Veränderungen des Modells nicht interaktiv von einem Benutzer eingegeben, sondern aus einem bereits vorhandenen NC-Programm abgeleitet werden.

Bei der Bildung neuer Konturelemente, die durch die Bearbeitung entstehen wird gleichzeitig erkannt, welche alten Konturelemente durch die Bearbeitung entfallen.

Die bei einer Bearbeitung hervorgerufenen Änderungen der Kontur an der bisherigen Oberfläche des Werkstücks und in der Zustelltiefe des Werkzeuges werden gleichzeitig in das Modell eingetragen, wobei selbstverständlich auch Oberflächen berücksichtigt werden, die bei der Bearbeitung entstehen und parallel zur Werkzeugachse liegen.

Weitere Vorteile sind den Unteransprüchen im Zusammenhang mit der nachfolgenden ausführlichen Beschreibung zu entnehmen.

Mit Hilfe von Ausführungsbeispielen soll die Erfindung anhand der Zeichnungen noch näher erläutert werden.

Es zeigt
- Figur 1: einen Quader als Werkstück
- Figur 2: eine einhüllende Kontur eines Fräsganges,
- Figur 3: eine Werkstückfläche in Parallelprojektion,
- Figur 4: einen Schnitt von Fräsgangkontur und Werkstückkante,
- Figur 5: eine Überlagerung von Werkstückfläche und Fräsgangkontur,
- Figur 6: eine Werkstückansicht mit Teilflächen,
- Figur 7: eine Ansicht einer bearbeiteten Werkstückfläche,
- Figur 8: eine räumliche Werkstück-Darstellung,
- Figur 9A,B,C: verschiedene Konturen-Konstellationen und
- Figur 10: ein Blockschaltbild.

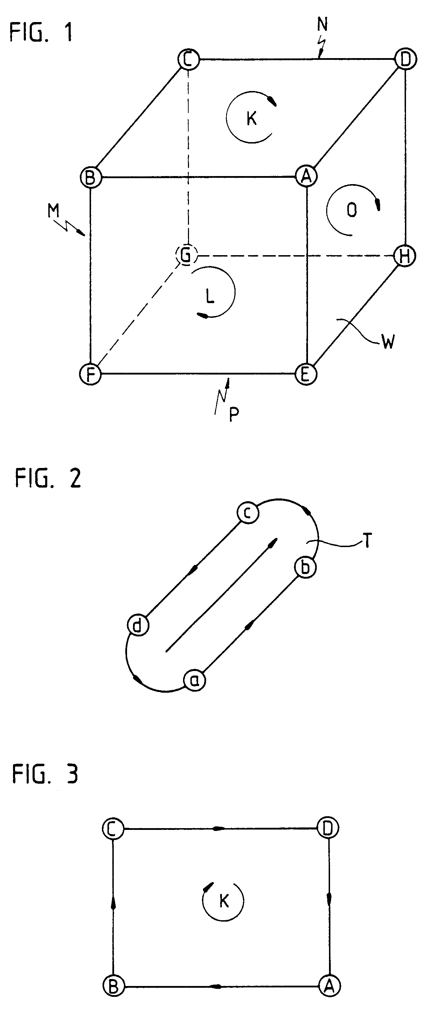

In Figur 1 ist ein Quader als Werkstück W dargestellt. Die Oberfläche des Werkstückes W besteht aus topologisch Zusammenhängenden Flächen K bis P. Die Flächen und ihre Lagen im Raum lassen sich jeweils durch einen Satz von Parametern beschreiben. Für die gezeigten ebenen Flächen K bis P sind dies beispielsweise die Parameter der sogenannten Hesseschen Normalform (Richtungscosinus des Normalenvektors und Abstand vom Ursprung). Ferner bestehen noch Angaben über die Berandung der Flächen.

Das Werkstück W weist acht Eckpunkte A bis H auf. Eckpunkte sind Punkt des Werkstückes W, die drei Flächen gleichzeitig angehören. Sie werden durch ihre kartesischen Koordinaten und durch Verweise auf die drei Flächen, denen sie angehören, beschrieben. Der Punkt A des Werkstückes W gehört demnach den Flächen K, L und O an.

Die Berandung eines Fläche besteht aus den Verbindungen zwischen den Eckpunkten. Für die Fläche K sind dies die Verbindungen AB, BC, CD, und DA. Die Orientierung (Richtung) der Verbindungen ist zweckmäßig für alle Verbindungen gleich gewählt und so festgelegt, daß alle Flächen von außen gesehen im Uhrzeigersinn (mathematisch negativen Sinn) umlaufen werden. Bei dem Punkt A gehört also zu dem Verweis auf die Fläche K der Verweis auf den Eckpunkt B usw.. Daraus ergibt sich, daß dem Verweis bei Punkt A auf den Punkt B als Berandung der Fläche K ein Verweis bei Punkt zurück zum Punkt A als Berandung genau der Fläche L entspricht, die in der Kante AB an die Fläche K angrenzt. Eine Kante entsteht also als Schnitt- oder Berührungslinie zweier Flächen. Sie wird als gerichtete Verbindung zweier Eckpunkte betrachtet.

Kanten dürfen sich nur in Eckpunkten schneiden.

Jede gerichtete Kante ist mit einer Fläche in der Weise verbunden, daß die Fläche bei Blick auf das Werkstück W rechts von der gerichteten Kante liegt (d.h. bei Bodenflächen wird das Werkstück von unten betrachtet!).

Die Berandung einer Fläche bildet eine oder mehrere geschlossene Ketten von Verweisen, d.h. vom letzten Punkt der Berandung gibt es wieder einen Verweis auf den ersten Punkt der Berandung. Welche Punkte den Anfang dieser Ketten bilden ist beliebig, entscheidend ist lediglich, daß bei der Fläche ein Verweis auf einen Punkt jeder Kette vorhanden ist, der als ihr Anfangspunkt benutzt wird. Die Berandung einer Fläche mit n Löchern oder Inseln besteht aus genau n+1 solcher Ketten.

In Figur 2 ist eine einhüllende Kontur eines Fräsganges T dargestellt, die aus der Mittelpunktsbahn eines Fräsers und seinem Radius berechnet und künftig vereinfacht als Fräsgang T bezeichnet wird. Die einhüllende Kontur besteht aus geraden und gebogenen Linienelementen (Konturelementen) und Eckpunkten an den Verbindungen zwischen diesen Konturelementen. Gezeigt ist ein gerader Fräsgang T mit den Eckpunkten a bis d, der die geraden Konturelemente ab und cd sowie die gebogenen Konturelemente bc und da enthält. Diese Eckpunkte a, b, c, d werden wiederum durch drei Koordinaten sowie den Typ des folgenden Konturelementes beschrieben und in einer richtungsorientierten Kette abcd aufgereiht. Wichtig ist, daß die von dieser Kontur eingeschlossene Fläche im ungekehrten Drehsinn umlaufen wird, wie die Flächen des Werkstückes W von ihren Berandungen. Der Ausgangspunkt a dieser Kette liegt in Richtung der Bewegung gesehen rechts vom Ausgangspunkt der Fräser-Mittelpunktsbahn. Der Drehsinn ist also gegen den Uhrzeigersinn - im mathematischen Sinn positiv - gerichtet.

Da die einzelnen Fräsgänge T stetig aneinander anschließen, wird nur um den Zielpunkt des Fräsganges T ein Halbkreis mit dem Fräserradius eingespeichert.

Ein Sonderfall ist die Bewegung ausschließlich parallel zur Werkzeugachse - dies führt zu einem zylindrischen Loch.

Um das Abtragen von Material am Werkstück beim Bearbeitungsvorgang (Fräsgang) zu simulieren, wird durch wiederholte schnitte des Fräsgangs T mit der Berandung des Werkstückes W die gesamte Bearbeitung des Werkstückes W im rechnerinternen Modell nachvollzogen.

Zur Ermittlung von Schnittpunkten zwischen Werkstück-Berandung und Fräsgang T werden gemäß Figur 3 die Eckpunkte A, B, C, D der Fläche K in eine Ebene senkrecht zur Werkzeugachse projiziert und die Projektion der einzelnen Kanten aus den Parametern der in der Kante aneinander grenzenden Flächen bestimmt. Die Kanten sind im allgemeinen Kegelschnitte, unter denen Strecken und Kreisbögen die einfachsten und am häufigsten vorkommenden Typen sind.

In einem weiteren Schritt wird die Fläche, deren Berandung geschnitten wird, als unendlich ausgedehnt angenommen. Sie teilt dabei den gesamten Raum in Zwei Halbräume, von denen einer als "leer" und der andere als "voll" betrachtet wird. Der Halbraum oberhalb der gedanklich erweiterten Fläche K oder rechts von der gedanklich erweiterten Fläche O im Beispiel der Figur 1 wird als "leer", ihr Komplement als "voll" betrachtet.

Alle Teile des Fräsganges T, die in den als "leer" angesehenen Halbraum fallen, werden beim Schnitt des Fräsganges T mit der Berandung der jeweiligen Fläche fortgelassen. Der verbleibende Rest des Fräsganges T wird durch ein neues Konturelement geschlossen und ebenfalls in eine Ebene senkrecht zur Werkzeugachse projiziert.

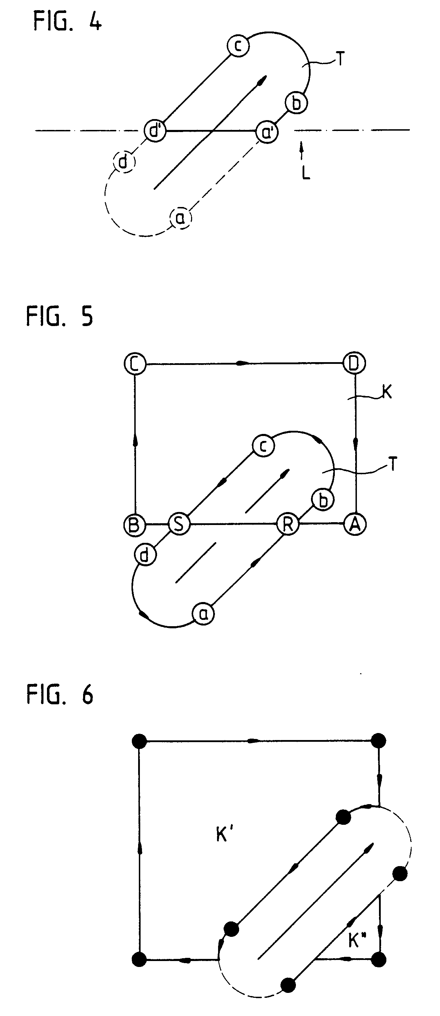

In Figur 4 wird dargestellt, wie die Kontur des Fräsganges T vor dem Schnitt mit der Berandung der Fläche L auf die im "vollen" Halbraum hinter der Fläche L liegende Kontur a′bcd′ verringert wird.

Der nächste Schritt besteht darin, die Konturelemente von Fräsgang T und Fläche K jeweils bestehend aus Anfangs-, Endpunkt und Typ der Verbindung miteinander zu schneiden. Die Berechnung dieser Schnittpunkte ist mit einem Mikroprozessorsystem relativ einfach möglich. Jeder Schnittpunkt wird gekennzeichnet durch seine Koordinaten, von denen sich zwei aus der Berechnung in der Projektionsebene und die dritte durch Einsetzen in die Parametergleichung der Fläche K ergeben, und die Lage auf den beiden Konturelementen von Fräsgang T und Fläche K unter Berücksichtigung der jeweiligen Umlaufrichtung der Berandung. In Figur 5 ist gezeigt, wie sich die Schnittpunkte R und S beim Schnitt des Konturelements AB der Berandung der Fläche K mit den Konturelementen ab und cd der einhüllenden Kontur des Fräsgangs T ergeben.

Mit Hilfe der ermittelten Schnittpunkte zwischen dem Werkstück W und dem Fräsgang T kann anhand der veränderten Daten des rechnerinternen Modells des Werkstückes W eine neue, resultierende Darstellung des bearbeiteten Werkstückes W erzeugt werden.

Anhand der Figur 5 soll die Bestimmung der resultierenden Fläche K beschrieben werden, wenn Schnittpunkte gefunden werden: Sie wird begonnen mit einem Punkt der Flächenberandung, der nicht vom Fräsgang T eingeschlossen wird. Als Beispiel soll der Punkt D gewählt werden. Von dort aus wird der erste Schnittpunkt auf der Berandung in ihrer gegebenen Orientierung gesucht. Alle dabei überschritteten Eckpunkte der Berandung werden zu Eckpunkten der resultierenden Berandung. In der Figur 5 ist der Punkt A ein solcher Eckpunkt. Der gefundene Schnittpunkt R wird in einen neuen Eckpunkt umgewandelt. Von ihm aus wird der nächste Schnittpunkt mit einer Kante der Berandung auf der einhüllenden Kontur des Fräsgangs T in deren Orientierung gesucht. Im Beispiel ist dies der Schnittpunkt S. Alle dabei überschrittenen Eckpunkte des Fräsganges T, wie die Punkte b und c, werden in Eckpunkte der resultierenden Berandung der Fläche K umgewandelt. Von dem neuen Schnittpunkt S aus wird abwechselnd auf der Berandung der Fläche K und dem Fräsgang T weitergesucht, bis der Ausgangspunkt wieder erreicht ist. Da sich in dem Beispiel kein weiterer Schnittpunkt ergeben hat, wird die Berandung der Fläche K nicht mehr verlassen und über die Punkte B und C der Ausgangspunkt D wieder erreicht. Die Fläche K hat nach dem Schnitt also die neue Berandung DARbcSBCD, wobei in diesem Kontext R, S, b, und c die neu entstandenen Eckpunkte des Modells bezeichnen sollen.

Dabei ist es möglich, daß nicht alle gefundenen Schnittpunkte in Eckpunkte der Berandung umgewandelt wurden. In diesem Fall ist die Fläche durch den Fräsgang T in mehrere Teil-Flächen geteilt worden, wie in Figur 6 zu sehen ist, wo die Teil-Flächen K′ und K˝ entstehen. Diese haben zwar alle dieselbe Parameterdarstellung, sind jedoch nicht mehr zusammenhängend. Für die noch nicht bestimmten Teile der ursprünglichen Fläche wird wie oben verfahren, bis alle Schnittpunkte zu Eckpunkten umgewandelt wurden.

Zu beachten ist, daß jede Kante (als Teil der Berandung der Flächen K und L) zweimal mit der einhüllenden Kontur des Fräsganges T geschnitten wird, jeder Schnittpunkt also doppelt entsteht und in zwei Berandungen einzuknüpfen ist, jedoch nur in einen Eckpunkt im Modell umgewandelt werden darf.

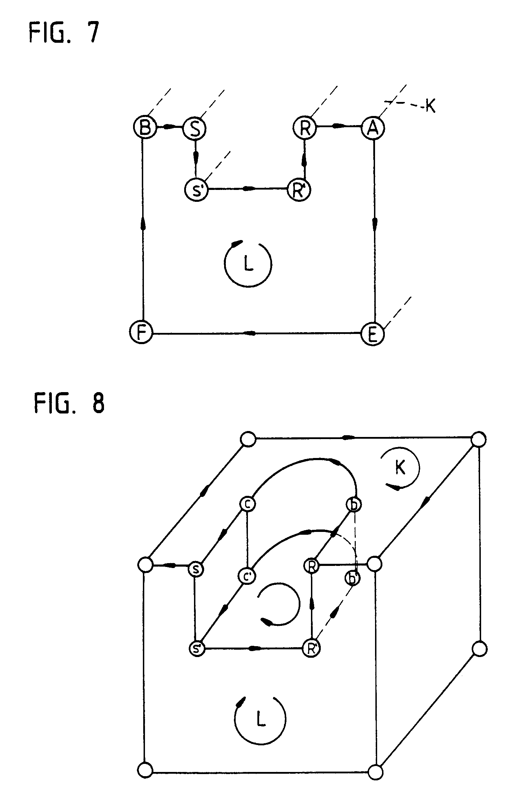

Bei Flächen, die parallel zur Werkzeugachse sind, können Fälle auftreten, in denen ein gefundener Schnittpunkt doppelt einzutragen ist (einmal auf Höhe der Berandung der Fläche K und einmal auf der Zustelltiefe des Fräsganges T). Ein solcher Fall ist in Figur 7 dargestellt, in der eine Frontansicht der Fläche L gezeichnet ist. Beim Schnitt der Kante BA mit der einhüllenden Kontur des Fräsgangs T entstehen die Schnittpunkte R und S (wie in Figur 5), die neue Berandung der Fläche L wird aber durch die Kette AEFBSS′R′RA gebildet. Dabei entstehen die Punkte R′ und S′ aus einem zusätzlichen Eintrag der Punkte R und S jeweils in der Zustelltiefe des Fräsganges T. Das Prinzip der Bestimmung der resultierenden Berandung bleibt dabei unverändert, wenn die duplizierten Schnittpunkte an der richtigen Stelle auf der Kontur des Fräsganges T "einsortiert" werden.

Wenn die Zustelltiefe des Werkzeugs in Richtung der Werkzeugachse gesehen über der Unterkante des Werkstücks W liegt, dann werden eine oder mehrere neue Flächen am Boden des Fräsgangs T erzeugt. Die Parameter dieser Flächen ergeben sich aus der Bewegung des Fräsermittelpunkts und der Richtung der Werkzeugachse. Die Berandung dieser Flächen beinhaltet die beim Schnitt aller Flächen gefundenen Schnittpunkte, die in der Zustelltiefe des Fräsers liegen, und wiederum Eckpunkte der einhüllenden Kontur des Fräsgangs T, die in der gegebenen Anordnung zwischen der ermittelten Schnittpunkten liegen.

Die Konstruktion dieser Berandung beginnt an dem in der Orientierung der einhüllenden Kontur des Fräsgangs T ersten Schnittpunkt, der auf der Zustelltiefe des Fräsers liegt. Dabei wird die Berandung in der umgekehrten Reihenfolge aufgebaut, in der sie in das Modell eingetragen wird.

Ist von dem Schnittpunkt die Verbindung, die zu der an die Bodenfläche angrenzenden Fläche gehört, noch nicht betimmt, so wird der nächste Schnittpunkt auf Zustelltiefe auf der richtungsorientierten Kontur des Fräsgangs T gesucht. Dabei übergangene Eckpunkte der Kontur des Fräsgangs T werden in Eckpunkte der Bodenfläche umgewandelt. Im Beispiel der Figur 8 ist dieser erste Punkt der Schnittpunkt R′. Zu ihm ist bislang nur die Verbindung zum Punkt R bei der Fläche L eingetragen, also muß der nächste Schnittpunkt der Bodenfläche auf der einhüllenden Kontur des Fräsgangs T gesucht werden. Dort ist der nächste Schnittpunkt der Punkt S′, dazwischen entstehen Eckpunkte b′ und c′.

Ist die Verbindung, die zu der an die Bodenfläche angrenzenden Fläche gehört, dagegen bereits bestimmt, so ergibt sich der nächste Punkt der Bodenfläche direkt aus dieser. Beim Schnittpunkt S′ ist diese Verbindung bestimmt: Es ist die Verbindung zum Punkt R′ bei der angrenzenden Fläche L. Der nächste Punkt der Bodenfläche ist daher der Punkt R′.

Das Verfahren wird von Schnittpunkt zu Schnittpunkt fortgesetzt, bis der Ausgangspunkt wieder erreicht ist. Anschließend werden die Eckpunkte der Bodenfläche in der umgekehrten Reihenfolge R′S′c′b′R′ als Berandung der neuen Bodenfläche gespeichert und zur Darstellung abrufbereit gehalten.

Sind nach der Konstrukten einer Bodenfläche nicht alle gefundenen Schnittpunkte auf Zustelltiefe in Eckpunkte umgewandelt, so entstehen mehrere Bodenflächen. Die Berandungen der weiteren Flächen lassen sich mit den noch verbleibenden Schnittpunkten, die auf der Zustelltiefe des Fräsers liegen, in genau derselben Weise konstruieren.

Existieren keine Schnittpunkte, die auf der Zustelltiefe liegen, obwohl eine Bodenfläche entstehen muß, so liegt diese ganz in einem Loch. Die Berandung dieser Bodenfläche ergibt sich in diesem Fall genau aus den Eckpunkten der einhüllenden Kontur des Fräsgangs T, die lediglich wieder in der umgekehrten Reihenfolge miteinander zu verknüpfen sind.

Als letzter Schnitt müssen die als Wände des Fräsgangs T entstehenden Flächen erzeugt werden. Dies geschieht ausgehend vom ersten Schnittpunkt auf der einhüllenden Kontur des Fräsgangs T. Im Beispiel der Figur 8 ist dies der Schnittpunkt R. Dieser Punkt gehört außer der neu entstehenden Fläche noch zwei weiteren Flächen an, in Figur 8 der Stirnfläche L und der Deckfläche K. Der nächste Punkt der neu entstehenden Wandfläche liegt auf der Berandung derjenigen dieser beiden Flächen, die in der Orientierung der einhüllenden Kontur des Fräsgangs T an die Wandfläche angrenzt. Im Beispiel ist dies die Fläche K und der nächste Punkt der Eckpunkt b.

Dieses Verfahren wird forgesetzt, bis ein Eckpunkt erreicht wird, bei dem bislang nur ein Verweis auf eine Fläche eingetragen ist oder die angrenzende Fläche Bodenfläche ist. Der erste Fall ist mit dem Eckpunkt b bereits erreicht, da bei ihm bislang nur der Verweis zum Punkt c existiert. Der zweite Fall trifft bei der letzten Wandfläche mit der Verbindung SS′ im Punkt S′ auf.

Im ersten Fall ist mit b ein Punkt erreicht, der aus einem Eckpunkt der einhüllenden Kontur des Fräsgangs T hervorgegangen ist. In diesem Fall wird mit dem darunterliegenden Eckpunkt der Bodenfläche fortgesetzt, der aus demselben Eckpunkt der einhüllenden Kontur des Fräsgangs T hervorgegangen ist. Im Beispiel ist dies der Punkt b′.

Die Berandung wird danach in jedem Fall mit dem folgenden Eckpunkt in Richtung der Orientierung der Bodenfläche fortgesetzt. Vom Punkt b′ aus ist der nächste Punkt der Punkt R′, vom Punkt S′ aus der Punkt c′. Dieser Punkt ist entweder der Anfangspunkt selbst, oder er liegt unmittelbar darunter (im Beispiel unter den Punkten R bzw. c) und wird durch eine senkrechte Kante mit ihm verbunden. Die Eckpunkte der neu entstandenen Wandflächen sind wiederrum in der umgekehrten Reihenfolge miteinander zu verbinden, wie sie gefunden wurden.

Dieser letzte Schritt ist gleichfalls zu wiederholen, bis die neu in das Modell eingetragenen Eckpunkte alle notwendigen Verweise auf Flächen und folgende Punkte der orientierten Berandungen besitzen. Anschließend sind alle Eckpunkte der ursprünglichen Beschreibung des Werkstücks W, die in keiner Berandung mehr verkommen, aus dem Modell zu entfernen.

Das Modell ist jetzt wieder in sich geschlossen, d.h. alle Eckpunkte haben Verweise zu drei Flächen und drei weiteren Eckpunkten und alle Flächen haben vollständige Berandungen. Im Beispiel der Figur 8 sind die Berandungen der Flächen K und L um zusätzliche Eckpunkte erweitert worden, der Flächeninhalt ist jedoch entsprechend dem Materialabtrag geschrumpft. Das Werkstück W weist jetzt vier zusätzliche Flächen auf, von denen eine aus der Bodenfläche und drei aus Wandflächen des Fräsgangs T hervorgegangen sind. Ein anschließender Fräsgang kann in der gleichen Weise behandelt und zur Weiterführung des Modells verwendet werden. Eine beliebige Bearbeitung eines Werkstücks W durch Bohren oder Fräsen kann auf diese Weise im Modell nachvollzogen werden, solange der für Eckpunkte und Flächen zur Verfügung stehende Speicherplatz ausreicht.

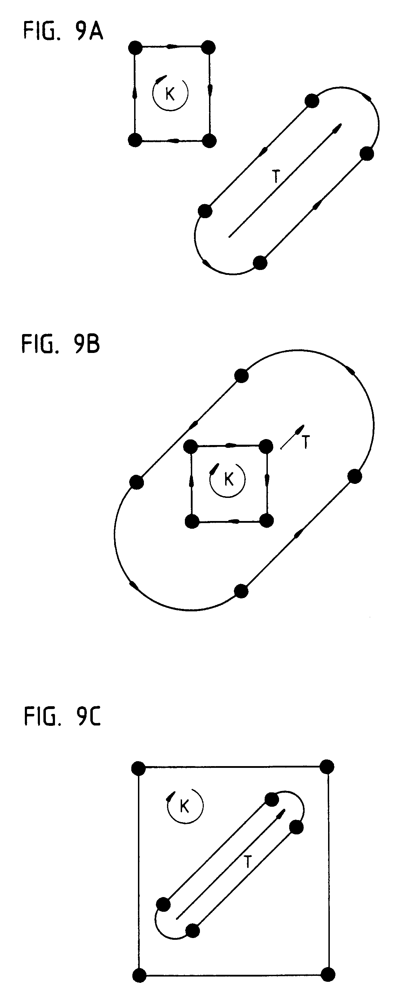

In den Figuren 9A bis 9C sind Sonderfälle gezeigt, bei denen mit dem vorbeschriebenen Verfahren zur Ermittlung von Schnittpunkten kein Schnittpunkt der Berandung einer Fläche mit der einhüllenden Kontur des Fräsgangs T gefunden wurde. Daher ist die Konstruktion der Fläche sehr einfach. Schließen sich die Kontur des Fräsgangs T und die Berandung der Fläche K nicht gegenseitig ein (Beispiel Figur 9a), so bleibt die Berandung der Fläche K unverändert und es sind für diese Fläche K keine Änderungen im Modell erforderlich. Wird ein beliebiger Eckpunkt der Fläche K von der Kontur des Fräsgangs T eingeschlossen (Beispiel Figur 9B), so wird es auch die ganze Fläche K, d.h. die Fläche K entfällt. Wird umgekehrt ein beliebiger Eckpunkt der Kontur des Fräsgangs T von der Berandung der Fläche K eingeschlossen (Beispiel Figur 9C), so wird es auch der ganze Fräsgang T. In diesem Fall wird die Kette von Verweisen für die Berandung nicht verändert, es kommt aber eine neue Kette hinzu, die das vom Fräsgang T erzeugt Loch in der Fläche K umschließt. Dazu werden die Koordinaten der Eckpunkte der Kontur des Fräsgangs T in der Parametergleichung der Fläche K eingesetzt und die Punkt berechnet, die die Durchdringung des Fräsgangs T durch die Fläche K beschrieben. Diese Punkte werden neu in das Modell aufgenommen und als Berandung des Lochs miteinander verknüpft.

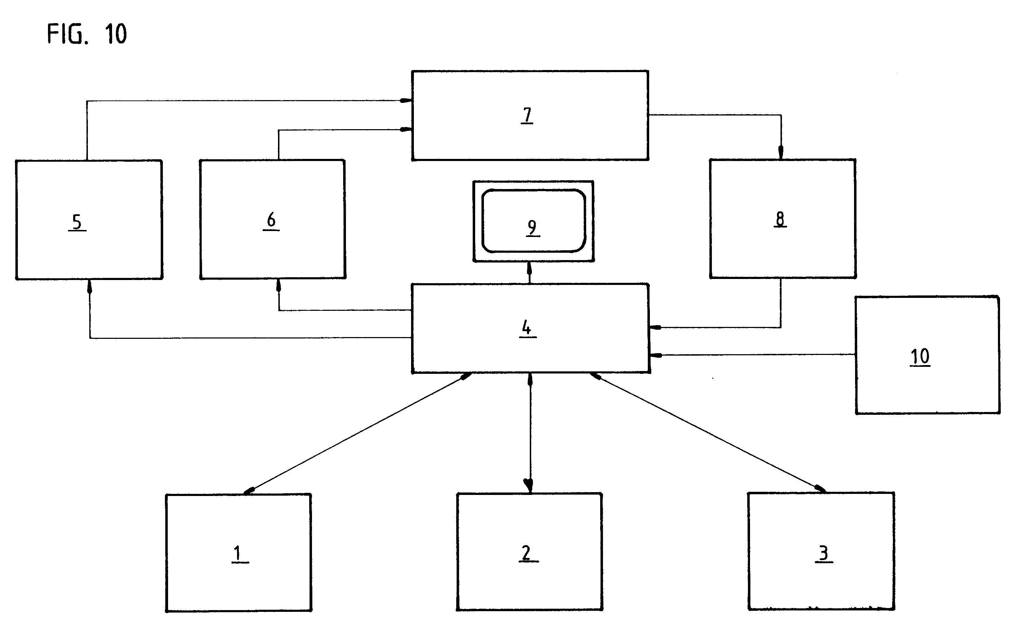

In Figur 10 ist ein Blockschaltbild einer NC-Steuerung für eine Werkzeugmaschine gezeigt, die zur Durchführung des vorgeschriebenen Verfahrens geeignet ist. Diese Vorrichtung enthält Speicher 1, 2, 3, in denen Informationen über die Eckpunkte A bis H, die Flächen K bis P und die einhüllende Kontur T abgelegt sind. Auf diese Speicher 1, 2, 3 greift ein Steuerwerk 4 zu, das die Informationen geometrischen Elementen zuordnet, die in Arbeitsspeichern 5, 6 abgelegt sind und zwischen denen ein Rechenwerk 7 Schnittpunkte ermittelt und in einem eigenen Schnittpunktspeicher 8 ablegt. Das Steuerwerk 4 verknüpft die Informationen über den bisherigen Stand des Modells, die einhüllende Kontur des Fräsganges T und die Schnittpunkte R, R′; S, S′ zu einer Beschreibung des Werkstücks W nach der Bearbeitung in dem rechnerinternen Modell und bringt es in der Anzeigeeinheit 9 zur Darstellung. Das Steuerwerk 4 ist mit einem NC-Programmspeicher 10 verbunden , in dem alle erforderlichen NC-Sätze abgespeichert sind.

Es versteht sich, daß es auch auf einem entsprechend organisierten Programmierplatz möglich ist, das erfindungsgemäße Verfahren durchzuführen.

## Patentansprüche

1. Verfahren zum Simulieren und Darstellen der Bearbeitung eines Werkstückes (W) mit einem Werkzeug, vorzugsweise auf einer numerisch gesteuerten Werkzeugmaschine, wobei anhand von Daten des Werkstückes (W) und des Werkzeuges Berandungs-Polygone von Werkstückoberflächen (K bis P) und Werkzeugbahnkonturen (T) gebildet und durch gegenseitige Verknüpfung verändert werden, indem zwischen den Konturelementen der Berandungs-Polygone von Werkstückoberflächen (K bis P) und Werkzeugbahnkonturen (T) eine Schnittpunktsüberprüfung stattfindet und die Schnittpunkte (R, R'; S, S') miteinander verbunden werden, gekennzeichnet durch folgende Schritte:
a) die Berandungs-Polygone werden als geschlossene Ketten mit Eckpunkten (A bis H bzw. a bis d) und richtungsorientierten Konturelementen als Verbindungen zwischen den Eckpunkten (A bis H bzw. a bis d) abgespeichert, wobei die Konturelemente einer Kette jeweils in derselben Richtung orientiert sind.;
b) die Richtung aller Berandungs-Polygone des Werkstückes (W) sind bei Betrachtung von außen auf die Werkstückoberflächen (K bis P) entgegen der Richtung der Berandungs-Polygone der Werkzeugbahnkontur (T) orientiert;
c) die Berandungs-Polygone des Werkstückes (W) und die Berandungs-Polygone der Werkzeugbahnkontur (T) werden in eine gemeinsame Ebene projiziert, in der zwischen diesen projizierten Berandungs-Polygonen Schnittpunkte (R, R'; S, S') ermittelt werden;
d) neue Eckpunkte (R, R'; S, S'; c, c'; b, b') entstehen aus allen in der Projektionsebene gefundenen Schnittpunkten (R, R'; S, S') und allen vom Berandungs-Polygon des Werkstückes (W) eingeschlossenen Eckpunkten (c, c'; b, b') des Berandungs-Polygons der Werkzeugbahnkontur (T);
e) die Lage der neuen Eckpunkte (R, R'; S, S'; c, c'; b, b') im Raum ergibt sich aus der Lage der Berandungs-Polygone des Werkstückes (W) und der Berandungs-Polygone der Werkzeugbahnkontur (T) im Raum, wobei diese neuen Eckpunkte (R, R'; S, S'; c, c'; b, b') Teile dieser Berandungs-Polygone sind;
f) die neuen Eckpunkte (R, R'; S, S'; c, c'; b, b') werden im vorgegebenen Richtungssinn der verknüpften Konturelemente miteinander verbunden, abgespeichert und zur Darstellung bereitgestellt.

2. Verfahren nach Anspruch 1, dadurch gekennzeichnet, daß die Berandungs-Polygone von Werkstück (W) und Werkzeugbahnkontur (T) zur Schnittpunktsüberprüfung in eine Ebene senkrecht zur Werkzeugachse projiziert werden.

3. Vorrichtung zum Simulieren und Darstellen der Bearbeitung eines Werkstückes (W) mit einem Werkzeug, vorzugsweise numerisch gesteuerte Werkzeugmaschine, bei der anhand von in Speichern (1, 2, 3) abgelegten Daten des Werkstückes (W) und des Werkzeuges mittels eines Steuerwerkes (4) Berandungs-Polygone von Werkstückoberflächen (K bis P) und Werkzeugbahnkonturen (T) gebildet, in Arbeitsspeichern (5, 6) abgespeichert und durch gegenseitige Verknüpfungen verändert werden, indem zwischen den Konturelementen der Berandungs-Polygone von Werkstückoberflächen (K bis P) und Werkzeugbahnkonturen (T) mittels eines Rechenwerkes (7) eine Schnittpunktsüberprüfung stattfindet und die Schnittpunkte (R, R'; S, S') miteinander verbunden werden, dadurch gekennzeichnet,daß die Berandungs-Polygone als geschlossene Ketten mit Eckpunkten (A bis H bzw. a bis d) und richtungsorientierten Konturelementen als Verbindungen zwischen den Eckpunkten (A bis H bzw. a bis d) in Arbeitsspeichern (5, 6) abgespeichert werden, wobei die Konturelemente einer Kette jeweils in derselben Richtung orientiert sind; und daß bei den in den Arbeitsspeichern (5, 6) abgespeicherten Berandungs-Polygonen die Richtung aller Berandungs-Polygone des Werkstückes (W) bei Betrachtung von außen auf die Werkstückoberflächen (K bis P) entgegen der Richtung der Berandungs-Polygone der Werkzeugbahnkontur (T) orientiert sind, und daß die Berandungs-Polygone des Werkstückes (W) und die Berandungs-Polygone der Werkzeugbahnkontur (T) mit dem Rechenwerk (7) in eine gemeinsame Ebene projiziert werden, in der zwischen diesen projizierten Berandungs-Polygonen mit dem Rechenwerk (7) Schnittpunkte (R, R'; S, S') ermittelt und in einem Schnittpunktspeicher (8) abgelegt werden; und daß aus allen vom Rechenwerk (7) in der Projektionsebene gefundenen Schnittpunkten (R, R'; S, S') und allen vom Berandungs-Polygon des Werkstückes (W) eingeschlossenen Eckpunkten (c, c'; b, b') des Berandungs-Polygons der Werkzeugbahnkontur (T) mit Hilfe des Steuerwerkes (4) neue Eckpunkte (R, R'; S, S'; c, c'; b, b') entstehen, deren Lage im Raum sich aus der Lage der Berandungs-Polygone des Werkstückes (W) und der Berandungs-Polygone der Werkzeugbahnkontur (T) im Raum ergibt, wobei diese vom Steuerwerk (4) ermittelten neuen Eckpunkte (R, R'; S, S'; c, c'; b, b') Teile dieser Berandungs-Polygone sind und im von den verknüpften Konturelementen vorgegebenen Richtungssinn miteinander verbunden und zur Darstellung in der Anzeigeeinheit (9) bereitgestellt werden.

4. Vorrichtung nach Anspruch 3, dadurch gekennzeichnet, daß das Steuerwerk (4) mit einem NC-Programmspeicher (10) verbunden ist.

## Claims

1. Method for the simulation and representation of the machining of a workpiece (W) with a tool, preferably on a numerically controlled machine tool, wherein with the aid of data of the workpiece (W) and tool, boundary polygons are formed by workpiece surfaces (K to P) and tool path contours (T) and varied by mutual linkage by the fact that between the contour elements of the boundary polygons of workpiece surfaces (K to P) and tool path contours (T), checking of points of intersection takes place and the points of intersection (R, R'; S, S') are connected to each other, characterised by the following steps:
a) the boundary polygons are stored as closed chains with corner points (A to H or a to d) and directionally oriented contour elements as connections between the corner points (A to H or a to d), wherein the contour elements of a chain are respectively oriented in the same direction;
b) the direction of all boundary polygons of the workpiece (W) is, when looking from the outside onto the workpiece surfaces (K to P), oriented opposite the direction of the boundary polygons of the tool path contour (T);
c) the boundary polygons of the workpiece (W) and the boundary polygons of the tool path contour (T) are projected in a common plane in which points of intersection (R, R'; S, S') are determined between these projected boundary polygons;
d) new corner points (R, R'; S, S'; c, c'; b, b') arise from all the points of intersection (R, R'; S, S') found in the plane of projection and all the corner points (c, c'; b, b') of the boundary polygon of the tool path contour (T) which are enclosed by the boundary polygon of the workpiece (W);
e) the position of the new corner points (R, R'; S, S'; c, c'; b, b') in space results from the position of the boundary polygons of the workpiece (W) and of the boundary polygons of the tool path contour (T) in space, wherein these nine corner points (R, R'; S, S'; c, c'; b, b') form parts of these boundary polygons;
f) the nine corner points (R, R'; S, S'; c, c'; b, b') are connected to each other in the predetermined direction of the linked contour elements, stored, and made available for representation.

2. Method according to claim 1, characterised in that the boundary polygons of workpiece (W) and tool path contour (T) are projected in a plane perpendicularly to the tool axis for checking or the points or intersection.

3. Apparatus for the simulation and representation of the machining of a workpiece (W) with a tool, preferably a numerically controlled machine tool, in which with the aid of data of the workpiece (W) and tool filed in memories (1, 2, 3), by means of a control unit (4), boundary polygons are formed by workpiece surfaces (K to P) and tool path contours (T), stored in main memories (5, 6) and varied by mutual linkage by the fact that between the contour elements of the boundary polygons of workpiece surfaces (K to P) and tool path contours (T), by means of an arithmetic unit (7) checking of points of intersection takes place and the points of intersection (R, R'; S, S') are connected to each other, characterised in that the boundary polygons are stored as closed chains with corner points (A to H or a to d) and directionally oriented contour elements as connections between the corner points (A to H or a to d) in main memories (5, 6), wherein the contour elements of a chain are respectively oriented in the same direction; and in that, in the case of the boundary polygons stored in the main memories (5, 6), the direction of all boundary polygons of the workpiece (W) is, when looking from the outside onto the workpiece surfaces (K to P), oriented opposite the direction of the boundary polygons of the tool path contour (T), and in that the boundary polygons of the workpiece (W) and the boundary polygons of the tool path contour (T) are projected with the arithmetic unit (7) in a common plane in which points of intersection (R, R'; S, S') are determined between these projected boundary polygons with the arithmetic unit (7) and filed in a point of intersection memory (8); and in that by means of the control unit (4) new corner points (R, R'; S, S'; c, c'; b, b') arise from all the points of intersection (R, R'; S, S') found by the arithmetic unit (7) in the plane of projection and all the corner points (c, c'; b, b') of the boundary polygon of the tool path contour (T) which are enclosed by the boundary polygon of the workpiece (W), the position of the new corner points (R, R'; S, S'; c, c'; b, b') in space resulting from the position of the boundary polygons of the workpiece (W) and of the boundary polygons of the tool path contour (T) in space, wherein these nine corner points (R, R'; S, S'; c, c'; b, b') determined by the control unit (4) form parts of these boundary polygons and are connected to each other in the direction predetermined by the linked contour elements and made available for representation in the display unit (9).

4. Apparatus according to claim 3, characterised in that the control unit (4) is connected to a NC programme memory (10).

## Revendications

1. Procédé pour la simulation et la représentation de l'usinage d'une pièce (W) au moyen d'un outil, de préférence sur une machine-outil à commande numérique, procédé dans lequel, à l'aide de données concernant la pièce (W) et l'outil, on détermine des polygones-enveloppes de surfaces de pièce (K à P) et de trace des trajectoires d'outil (T) et on les modifie par chaînage réciproque, un contrôle des points d'intersection (R, R'; S, S') entre les éléments de contour des polygones-enveloppes de surfaces de pièce (K à P) et de trace des trajectoires d'outil (T) étant effectué et les points d'intersection (R, R'; S, S') étant reliés entre eux, procédé caractérisé par les étapes suivantes:
a) on mémorise les polygones-enveloppes sous forme de chaînes fermées avec des sommets (A à H et a à d) et des éléments de contour orientés comme liaisons entre les sommets (A à H et a à d), les éléments de contour d'une chaîne étant orientés dans la même direction;
b) on oriente la direction de tous les polygones-enveloppes de la pièce (W), vu de l'extérieur en direction des surfaces de la pièce (K à P), à l'opposé de la direction des polygones-enveloppes de trace des trajectoires d'outil (T);
c) on projette les polygones-enveloppes de la pièce (W) et les polygones-enveloppes de trace des trajectoires d'outil (T) dans un plan commun, dans lequel on détermine des points d'intersection (R, R'; S, S') entre lesdits polygones-enveloppes projetés;
d) on obtient de nouveaux sommets (R, R'; S, S'; c, c'; b, b') à partir de tous les points d'intersection (R, R'; S, S') trouvés dans le plan de projection et de tous les sommets (c, c'; b, b') du polygone-enveloppe de trace des trajectoires d'outil (T) inscrit dans le polygone-enveloppe de la pièce (W);
e) on obtient la position dans l'espace des nouveaux sommets (R, R'; S, S'; c, c'; b, b') à partir de la position des polygones-enveloppes de la pièce (W) et des polygones-enveloppes de trace des trajectoires d'outil (T) dans l'espace, ces nouveaux sommets (R, R'; S, S'; c, c'; b, b') faisant partie de ces polygones-enveloppes;
f) on relie entre eux les nouveaux sommets (R, R'; S, S'; c, c'; b, b'), dans le sens prédéterminé des éléments de contour liés, mémorisés et appelés pour la représentation.

2. Procédé selon la revendication 1, caractérisé par le fait que, pour le contrôle des points d'intersection, on projette dans un plan perpendiculaire à l'axe de l'outil les polygones-enveloppes de la pièce (W) et de trace des trajectoires d'outil (T).

3. Dispositif pour la simulation et la représentation de l'usinage d'une pièce (W) au moyen d'un outil, de préférence sur une machine-outil à commande numérique, dans lequel, à l'aide de données concernant la pièce (W) et l'outil stockées dans des mémoires (1, 2, 3), on détermine des polygones-enveloppes de surfaces de pièce (K à P) et de trace des trajectoires d'outil (T) au moyen d'une unité de commande (4), on les mémorise dans des mémoires de travail (5, 6) et on les modifie par chaînage réciproque, un contrôle des points d'intersection entre les éléments de contour des polygones-enveloppes de surfaces de pièce (K à P) et de trace des trajectoires d'outil (T) étant effectué au moyen d'un calculateur (7) et les points d'intersection (R, R'; S, S') étant reliés entre eux, dispositif caractérisé par le fait que les polygones-enveloppes sont mémorisés dans des mémoires de travail (5, 6) sous forme de chaînes fermées avec des sommets (A à H et a à d) et des éléments de contour orientés comme liaisons entre les sommets (A à H et a à d), les éléments de contour d'une chaîne étant orientés chaque fois dans la même direction; par le fait que, dans les polygones-enveloppes mémorisés dans les mémoires de travail (5, 6), la direction de chaque polygone-enveloppe de la pièce (W) est orientée dans la direction opposée des polygones-enveloppes de trace des trajectoires d'outil (T), vu de l'extérieur en direction des surfaces de la pièce (K à P); par le fait que les polygones-enveloppes de la pièce (W) et les polygones-enveloppes de trace des trajectoires d'outil (T) sont projetés au moyen du calculateur dans un plan commun dans lequel des points d'intersection (R, R'; S, S') entre lesdits polygones enveloppes projetés sont déterminés au moyen du calculateur et mémorisés dans une mémoire de points d'intersection (8); par le fait qu'à partir de tous les points d'intersection (R, R'; S, S') trouvés dans le plan de projection et de tous les sommets (c, c'; b, b') du polygone enveloppe de trace des trajectoires d'outil (T) contenus dans le le polygone-enveloppe de la pièce (W) on obtient à l'aide de l'unité de commande (4) de nouveaux sommets (R, R'; S, S'; c, c'; b, b'), dont la position dans l'espace résulte de la position dans l'espace des polygones-enveloppes de la pièce (W) et des polygones-enveloppes de trace des trajectoires d'outil (T), les nouveaux sommets (R, R'; S, S'; c, c'; b, b') déterminés par l'unité de commande (4) faisant partie desdits polygones-enveloppes, étant liés entre eux dans le sens prédéterminé par les éléments de contour chaînés et étant appelés pour la représentation sur l'unité d'affichage (9).

4. Dispositif selon la revendication 3, caractérisé par le fait que l'unit de commande (4) est connectée à une mémoire de programme (10) de commande numérique.
